# EUROPEAN PATENT SPECIFICATION

(11) **EP 0 666 028 B1**
(45) Date of publication and mention of the grant of the patent: **04.10.2000**
(21) Application number: 95101258.2
(22) Date of filing: 30.01.1995
(51) Int. Cl.: A21D 15/00, A21D 4/00, A23L 3/3418, A23L 3/3445

(54) **Process and apparatus for increasing the preservability of bread, special bread,leavened bakery products, either cooked or partly cooked, packed in a modified atmosphere**
Verfahren und Anlage zur Haltbarkeitsverbesserung von Brot, spezielles Brot, getriebene Backwaren, Gebäcke oder teilweise Gebäcke, in Packungen mit geanderter Gashülle
Procédé et appareil pour améliorer la conservation du pain, pain spécial, produits de boulangerie levés, cuits ou partiellement cuits, emballés sous atmosphère modifiée

(30) Priority: 31.01.1994 IT MI940158
(43) Date of publication of application: 09.08.1995
(73) Proprietor: Piergiovanni, Luciano, 20090 Rodano (MI) (IT); Vismara, Mario Andrea, MC-98000 Principato Di Monaco (MC)
(72) Inventor: Piergiovanni, Luciano, 20090 Rodano (MI) (IT); Vismara, Mario Andrea, MC-98000 Principato Di Monaco (MC)
(74) Representative: Trupiano, Roberto

(56) References cited:
- EP-A- 0 013 724
- CH-A- 229 599
- FR-A- 991 168
- FR-A- 1 481 243
- GB-A- 2 005 980
- GB-A- 2 200 614
- US-A- 4 935 255

## Description

This invention relates to a process and a device especially designed to increase the preservability of bread, special bread, leavened bakery products, either cooked or partly cooked, packed in a modified atmosphere.

The so-called leavened bakery products are products obtained through the complete or partly cooking of dough, possibly already leavened, which is prepared with grain flours, water, biologic leaven or baking powders and other ingredients, such as salt, sugar, spices, animal and/or vegetable fats and the like, to lend the finished product a characteristic taste and a particular consistency.

The definition "leavened bakery products" includes bread, special bread, flat loaves, pizzas, feast-cakes, one and multidose leavened products, and especially the so-called "flat baguette", which is a bread having an average size of 31 x 13 x 5 cm and a soft and elastic crumb, with large and irregular alveoluses, irregular and golden-brown flour-sprinkled crust.

An important problem associated with leavened bakery product concerns their preservability.

Actually, the acceptability of leavened bakery products reduces in time, both because they undergo a spontaneous and inevitable phenomenon of a physical-chemical nature, due to the very ingredients utilized, i.e. the so-called staling, and because the distribution of humidity changes in their inside: the innermost part dehydtrates, while the outer part, i.e. the crust, hydrates, becoming rather soft.

Further alterations are brought about by a microbial and fungus-development, i.e. by the so-called microbial proliferation.

Staling is an alteration which corresponds to a consistency variation in the crumb and the crust, which reduces markedly the satisfaction of the consumer, and which is due to chemical-physical modifications, which start appearing just after cooking.

Tha staling phenomenon is caused by a water transfer between proteins and starch and by starch retrogradation, due to which it recovers part of the crystalline organization proper of the raw materials and which had gone lost with the gelling which has taken place during the cooking.

In order to try to counter staling, the means utilized at present are based on the utilization of very low preservation temperatures, of about -15°C, which allow to keep the product inalterated for a long period.

Other techniques exploit the activity of some substances, such as mono and diglycerides, pentosans and other substances which may be either normally contained in the flour or produced during the leavening or purposely added as additives.

However, the utilization of these additional elements is not always applicable.

Another technique utilizes ethyl alcohol vapours, which develop a positive staling-slowening effect.

However, the utilization of ethanol is disciplined by the health law and admitted only for sliced loaf.

Another technique utilized provides for the application of atmospheres with high concentration of carbon dioxide.

Carbon dixiode, which dissolves in the product, seems to have an antistaling activity, probably due to a block of water-receptive sites of the amylopectinc starch fraction, which modifies the possibility of internal water migration between starch and proteins.

But such technique is not easily utilizable with leavened products, as the latter, because of their large internal alveoluses, keep too high an oxygen content.

As concerns bacterial proliferation, it is worth mentioning that the product coming out of the oven may be considered as sterile, as the cooking temperatures utilized are such as to destruct all the vegetative forms that are present during the production, except for some sporogenic forms of micro-organisms which contaminate equipments and raw materials (genus bacillus). The outermost part of bakery products has generally a rather low relative humidity, which prevents the proliferation of any microbial species.

However, the possible rehydration leads to conditions that allow the development of microbial species (especially moulds of the aspergillus and pennicillium genuses) which are due to ambient contamination.

A possible microbial alteration is also due to the proliferation of a sporogenic species (bacillus mesentericus), which too comes from the contamination of raw materials or equipments, and which lends crumb a stringly appearance and causes unpleasant taste alterations.

Controlling microflora is possible through the utilization of additives such as propionates, acetates, lactates, potassium, calcium or sodium sorbates, or through the addition of ethyl alcohol in the packing stage, which exerts a bacteriostatic and mycostatic activity.

Also replacing the air with modified atmospheres is useful to this aim.

In particular, the exlusion of oxygen and/or the addition of carbon dioxide can exert an effective mycostatic and bacteriostatic activity, which slows the development of unwished micro-organisms, especially the aerobic ones.

Considering in particular the field of bread and leavened bakery products, and especially the so-called "flat baguettes", the aforementioned techniques are not easily applicable, as one of the main problems which have to be faced to optimize the packing in modified atmosphere of leavened bakery product, is constituted by the control of residual oxygen.

If the latter is not eliminated, the product is bound, within a more or less long period of time, to undergo an extensive microbial proliferation.

The main packing systems known to the present art cannot assure a complete replacement of the air with the chosen atmosphere, as they substantially operate by diluting ambient air with the modified atmosphere introduced?during the packing.

So, in the packing stage, a quantity of oxygen remains of about 0.5 - 1.5% in volume.

Besides, as leavened products are characterized by large internal alveoluses which form a big air reserve, after some hours at the most a gaseous composition form in the product, which is the result of the balance reached between the atmosphere introduced during the packing and the atmosphere contained in the product.

In the packing in modified atmosphere of leavened bakery products, however carefully one operates, one finds inevitably an oxygen residue exceeding the average values and which may range between 5 - 10%, depending on the type of product and the volume of modified atmosphere introduced in the product.

This residual oxygen thwarts the effect of the packing in modified atmosphere, as it does not allow to effectively stop the development of moulds and bacteria, which unavoidably contaminate the product.

For all of these reasons, at present, to increase the preservability of leavened bakery products, and in particular of the so-called "ciabatta" or "flat baguette", the only easy solution is the freezing technique, applying temperatures of about -15°C, which allows to ensure a long preservability in the long run.

However, such techniques are particularly expensive, as they involve the utilization, especially for long-distance transports, of special refrigerating rooms, which are to be suitably fed to keep the temperature wished.

Object of this invention is to eliminate the aforementioned drawbacks, realizing a process and a device to increase the preservability of bread, special bread and leavened bakery products, either cooked or partly cooked, such as to be applicable in the traditional production chains, without changing the performances and the operating principle and without the addition of chemical substances, but allowing to obtain a product having a high preservability in the long run.

Within the aforementioned object, a special aim of this invention is to realize a process that does not alterate the visual aspect of the product and does not require the application of cold.

Another object of this invention is to realize a process that can be indifferently utilized in cooked or partly cooked products having possibly diffent humidity contents.

A further not least object of this invention it to realize a device that can be easily installed in the normal production lines, without changing for this the production times.

Tha aforementioned aim and the objects mentioned and still other ones, which will be stressed in the following, are achieved by a process for increasing the preservability of bread, special bread and leavened bakery products, either cooked or partly cooked, (prepared in a modified atmosphere) according to this invention, characterized in that it consists in injecting, in the inside of the mass of the bakery product, either cooked or partly cooked, a gas of a mix of gases possibly aseptically humidified, with complete replacement of the air and saturation of the product, and in packing the just treated product with air-tight wrappings or bags.

Further characteristics and advantages of this invention shall be better stressed by the description of a preferred non exclusive embodiment of a process and a device suitable to increase the preservability of bread, special bread and leavened bakery products, either cooked or partly cooked, illustrated by way of non limitative example, with the help of the enclosed drawings, wherein:

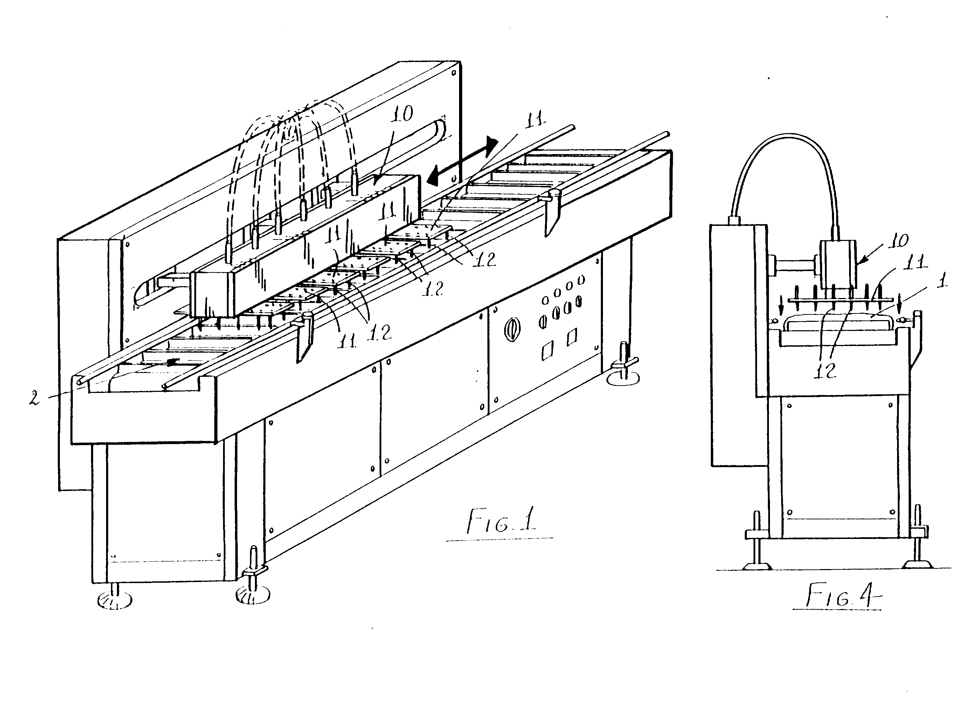

Fig. 1 shows schematically the perspective view of the device subject matter of this invention;

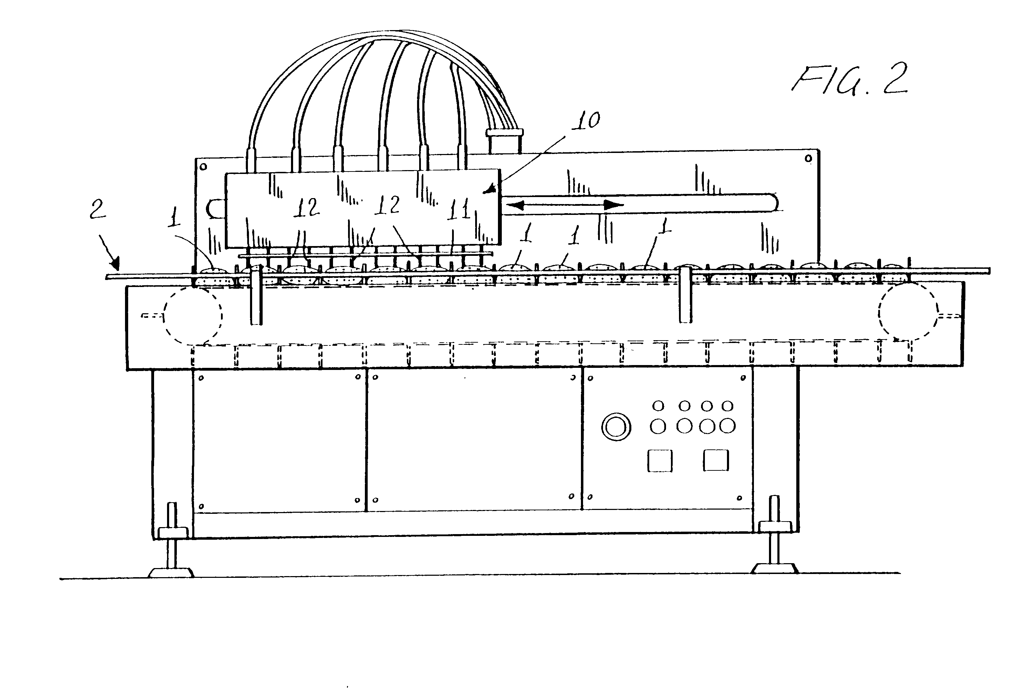

Fig. 2 shows the front elevation of said device;

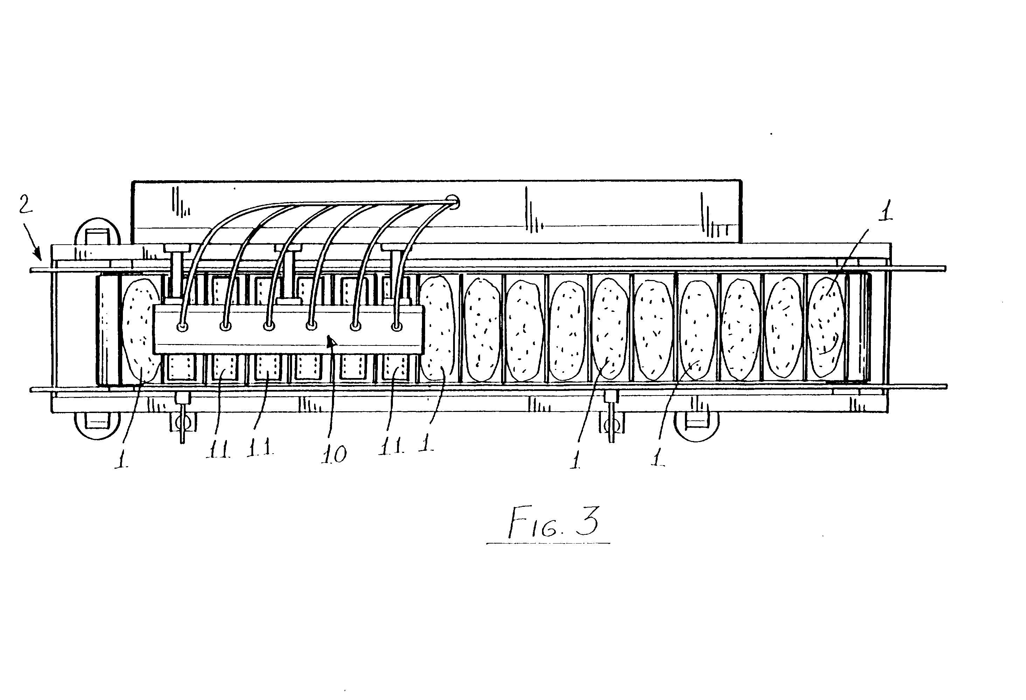

Fig. 3 shows the plan of said device;
Fig. 4 shows the side elevation of said device.

With special reference to the numbers of said figures, the process for increasing the preservability of bread, special bread and leavened bakery products, either cooked or partly cooked, according to this invention, consists in injecting inside the mass of the cooked or partly cooked bakery product 1 a gas (generally carbon dioxide) or a mix of gases possibly aseptically humidified, to achieve a complete replacement of the air and a saturation of the product with the chosen modified atmosphere, without any modification of the product and the traditional preparation lines.

The operation of gaseous injection lasts 2 to 6 seconds and does not interrupt the packing process, allowing to bring the level of residual oxygen, in the balanced packing, to values lower that 1%, such as to allow a period of preservation, with no risks of microbial proliferation.

To perform such gas injection, on line 2 of cooking or partly cooking oven delivery a group 10 is interposed, constituted by a plurality of plates 11 with needles 12, which penetrate product 1. Group 10 is translable, to follow, for a pre-established period of time, the product on the transport line 2.

Once the step of gas injection has ended, group 10, when the plates have lifted and the needles have come out of the product, goes back to the starting station, to repeat the above cycle.

The gas injection is performed just before the packing with an air-tight wrapping or bag.

No more than 2 minutes should advantageously pass from gas injection to packing.

This time is assured by the fact that the crust of the product realizes practically a barrier which slows the coming out of the gas from the product.

Consequently, on packing the product, the quantity of oxygen that remains within the package is very low.

The effects obtained on the preservation of the product depend on the characteristics of the latter, the packing, and the gas mix utilized.

In any case, the process subject matter of this invention assures a better presentation and preservation of the product for a period of time much longer that the usual preservability periods.

According to a variant of this invention, a certain quantity of steam is associated to the gas which is injected in the inside of the product, in particular to counterbalance the tendency to dehydration of the product which takes place when one introduces the gas (CO₂ and/or N₂), which is usually anhydrous, i.e. with a water contents of between 10 and 20 ppm; actually, in particular on the basis of experiments, this dehydration may be estimated to be equal to a loss comprised between 0.4 and 2 g for each product, depending on the temperature at which the operation is performed. Considering products with an average water content equal to 30%, such reduction may be unacceptable from the organoleptic point of view, which renders the preliminary aseptic humidification of the gas according to this invention indispensable. Always according to this invention a certain quantity of ethanol may be associated to the gas injected inside the product, which ethanol exerts, as mentioned, a staling-slowing activity. Both water and ethanol may be advantageously associated to the gas in a carefully weighed out quantity and in a controlled way, causing for instance the gas or a part of same to gurgle in the water and/or the ethanol at a temperature so defined as to cause the saturation of the gas. Or else, water and ethanol may be introduced in the gas by means of a volumetric pump or the like.

The operation of gas injection in modified atmosphere may be carried out just after the delivery from the oven in the hot product or after a cooling pause of the latter.

In any case, the operation of gas injection lowers the temperature of the product as a consequence of the expulsion of the internal atmosphere, whose temperature is higher that the external portion, which represents therefore a stage of reduction in the production process times and of working rationalization.

From what has been described above, one understands that the invention achieves the intended objects.

In particular, it is worth stressing that, by injecting directly the gas, preferably carbon dioxide, inside the product, one obtains a saturation of the inner cells due to the leavening of the product, with expulsion of the oxygen and ensuing increase in preservation times, without the addition of chemical preservatives.

In these conditions, the product can be preserved at ambient temperature even if partly cooked, without having recourse to the freezing techniques which are at present utilized for long-distance transports.

## Claims

1. Process for increasing the preservability of bread, special bread and leavened bakery products, either cooked or partly cooked, prepared in a modified atmosphere, characterized in that it consists in aseptically injecting in the inside of the mass of the cooked or partly cooked bakery product, a gas or a mix of gases, aseptically with complete replacement of the air and saturation of the product, and in packing the product just treated in an air-tight wrapping or bag.

2. Process according to the preceding claim, characterized in that the above gas is constituted by carbon dioxide and that the above mixes contain carbon dioxide mixed with nitrogen, argon or other gases other than air and oxygen.

3. Process according to claim 1, characterized in that steam is associated to said gas or gas mixes.

4. Process according to claim 1, characterized in that ethanol is associated to said gas or gas mix.

5. Device to increase the preservability of bread, special bread and leavened bakery products, either cooked or partly cooked, characterized in that it comprises, on the transfer line of the product from the oven to the packing, a group supporting a plurality of plates, provided with needles which can be introduced in the inside of the product and which are connected to a source for feeding a gas in a modified atmosphere.

6. Device according to claim 5, characterized in that the above group has a translation motion synchronous with the product feed line and a return-travel, to bring the plates to the starting position, with introduction of the needles in the following plurality of products.

7. Product constituted by bread, special bread, leavened bakery products, either cooked or partly cooked, with a long preservation term, characterized in that it is contained in an impermeable and air-tight package, and that the alveoluses and porosities of said product are substantially free from oxygen and/or air and are filled with a gas such as carbon dioxide and/or nitrogen and/or argon and/or other gases other than air and oxygen.

## Patentansprüche

1. Verfahren zum Erhöhen der Haltbarkeit von Brot, Spezialbrot und Sauerteig-Backwaren, entweder gebacken oder teilweise gebacken, die in einer modifizierten Atmosphäre hergestellt worden sind, dadurch gekennzeichnet, daß es aus dem aseptischen Einspritzen eines Gases oder Gasgemisches in das Innere der Masse der gebackenen oder teilweise gebackenen Backware unter aseptischen Bedingungen, wobei die Luft vollständig ersetzt und das Produkt gesättigt wird, sowie dem Verpacken des soeben behandelten Produkts in einer luftdichten Hülle oder einem luftdichten Beutel besteht.

2. Verfahren nach dem vorstehenden Anspruch, dadurch gekennzeichnet, daß das vorgenannte Gas aus Kohlendioxid besteht und die vorgenannten Gemische Kohlendioxid im Gemisch mit Stickstoff, Argon oder anderen Gasen, die nicht Luft und Sauerstoff sind, enthalten.

3. Verfahren nach Anspruch 1, dadurch gekennzeichnet, daß in dem genannten Gas oder den Gasgemischen Wasserdampf enthalten ist.

4. Verfahren nach Anspruch 1, dadurch gekennzeichnet, daß in dem genannten Gas oder Gasgemisch Ethanol enthalten ist.

5. Vorrichtung zum Erhöhen der Haltbarkeit von Brot, Spezialbrot und Sauerteig-Backwaren, entweder gebacken oder teilweise gebacken, dadurch gekennzeichnet, daß sie auf dem Weg des Produkts vom Ofen zum Verpacken eine Gruppe aufweist, die mit einer Mehrzahl von Platten versehen ist, ausgerüstet mit Nadeln, die in das Innere des Produkts eingeführt werden können und mit einer Quelle zur Zufuhr eines Gases in einer modifizierten Atmosphäre verbunden sind.

6. Vorrichtung nach Anspruch 5, dadurch gekennzeichnet, daß die vorgenannte Gruppe eine Translationsbewegung durchführt, die synchron mit dem Produktzufuhrweg und einem Rückweg verläuft, um die Platten in die Ausgangsposition zu bringen, wobei die Nadeln in die nachfolgende Mehrzahl von Produkten eingeführt werden.

7. Produkt, bestehend aus Brot, Spezialbrot oder Sauerteig-Backwaren, entweder gebacken oder teilweise gebacken, mit einer langen Haltbarkeitedauer, dadurch gekennzeichnet, daß es in einer undurchlässigen und luftdichten Verpakkung enthalten ist und die Zellen und Porositäten des Produkts im wesentlichen frei von Sauerstoff und/oder Luft sind sowie mit einem Gas, wie Kohlendioxid und/oder Stickstoff und/oder Argon und/oder anderen Gasen, die nicht Luft und Sauerstoff sind, gefüllt sind.

## Revendications

1. Procédé pour augmenter la conservation de pains de pain spécial et de produits de boulangerie soumis à levure soit cuits ou cuits en partie, préparés dans une atmosphère modifiée, caractérisé en ce que il consiste dans l'injection de façon aseptique à l'intérieur de la masse du produit de boulangerie cuit ou cuit en partie, d'un gaz ou d'un mélange de gaz de façon aseptique avec un remplacement total de l'air et la saturation du produit et que le produit est emballé à peine traité dans une confection ou en sac imperméable à l'air.

2. Procédé suivant la revendication précédente caractérisé en ce que ledit gaz est constitué par anhydride carbonique et que lesdits mélanges contiennent anydride carbonique mélangée avec azote, argon ou d'autres gaz différents de l'air et de l'oxigène.

3. Procédé suivant la revendication 1, caractérisé en ce que audit gaz ou mélange de gaz est associé la vapeur d'eau.

4. Procédé suivant la revendication 1, caractérisé en ce que audit gaz ou mélange de gaz est associé l'éthanol.

5. Dispositif pour augmenter la conservation de pain, pain spécial et produits de boulangerie soumis à levure, cuits ou cuits en partie, caractérisé en ce que il comprend sur la ligne de transport du produit depuis le four jusqu'à l'emballage, un groupe supportant une pluralité de plaques, munies d'aiguilles qui peuvent être introduites à l'intérieur du produit et qui sont connectées à une source d'alimentation d'un gaz dans une atmosphère modifiée.

6. Dispositif suivant la revendication 5 caractérisé en ce que ledit groupe est doté d'un mouvement de translation synchrone avec la ligne d'avancement du produit et d'une course de retour pour ramener les plaques dans la position de départ, avec introduction des aiguilles dans une pluralité suivante de produits.

7. Produit constitué de pain, pain spécial, produits de boulangerie soumis à levure, cuits ou cuits en partie, à longue conservation, caractérisé en ce qu'il est contenu dans une confection etanche imperméable à l'air et que les alvéoles et les porosités dudit produit sont substantiellement exempts d'oxygène et/ou d'air et sont remplis de gaz tels que l'anhydride carbonique et/ou azote et/ou argon d'autres différents de l'air et de l'oxygène.
